# EUROPÄISCHE PATENTSCHRIFT

(11) **EP 3 748 951 B1**
(45) Veröffentlichungstag und Bekanntmachung des Hinweises auf die Patenterteilung: **15.02.2023**
(21) Anmeldenummer: 19178794.4
(22) Anmeldetag: 06.06.2019
(51) Int. Cl.: H04N 5/232, G04G 5/00, G04G 7/00

(54) **BESTIMMUNG EINER ABWEICHUNG EINER ZEIT EINER KAMERA VON EINER ZEIT EINES ZEITGEBERS**
DETERMINING A DEVIATION OF A TIME OF A CAMERA FROM A TIME OF A TIMER
DÉTERMINATION D'UN ÉCART DE TEMPS D'UNE CAMÉRA D'UN TEMPS D'UN REGISTRE D'HORLOGE

(43) Veröffentlichungstag der Anmeldung: 09.12.2020
(73) Patentinhaber: Siemens Aktiengesellschaft, 80333 München (DE)
(72) Erfinder: Engel, Thomas, 73432 Aalen (DE); Laloni, Claudio, 82024 Taufkirchen (DE)

(56) Entgegenhaltungen:
- US-A1- 2017 111 565

## Beschreibung

Die Erfindung betrifft ein Verfahren zur Bestimmung einer Abweichung einer Zeit einer Kamera von einer Zeit eines Zeitgebers. Des Weiteren betrifft die Erfindung eine für das genannte Verfahren geeignete Kamera sowie einen für das genannte Verfahren geeigneten Zeitgeber. Schließlich betrifft die Erfindung auch ein Verfahren zum Steuern einer koordinierten Aufnahme mehrerer Bilder von mehreren Kameras.

In einigen Fällen ist die genaue Kenntnis des Zeitpunkts wünschenswert, zu dem ein Bild mit einer Kamera aufgenommen wurde. Als Beispiel sei hierfür die 3D-Rekonstruktion eines Objekts zu nennen. Hierunter ist die Erzeugung (oder: Rekonstruktion) von Tiefeninformationen eines Gegenstands zu verstehen, basierend zum Beispiel lediglich auf mehreren zweidimensionalen Bildern desselben Gegenstands aus unterschiedlichen Perspektiven. Als Input für die 3D-Rekonstruktion können beispielsweise ein von einer ersten Kamera aufgenommenes erstes Bild und ein von einer zweiten Kamera aufgenommenes zweites Bild dienen, wobei sich die beiden Kameras an unterschiedlichen Orten befinden. Bewegt sich der Gegenstand während des Aufnahmezeitraums der beiden Bilder bezüglich der beiden Kameras nicht, spielen die exakten Zeitpunkte, zu denen die beiden Bilder gemacht wurden, keine Rolle. Liegt jedoch eine Relativbewegung zwischen dem Gegenstand und mindestens einer der beiden Kameras während des Aufnahmezeitraums vor, ist es für eine präzise 3D-Rekonstruktion wichtig, dass die beiden Bilder zu (exakt) demselben Zeitpunkt gemacht werden oder dass die zeitliche Abweichung zumindest bekannt ist. Es ist also zumindest nötig, dass ein von einer Kamera aufgenommenes Bild mit einer Information versehen ist, die den genauen Aufnahmezeitpunkt angibt.

Herkömmlicherweise wird für die Angabe des Aufnahmezeitpunkts auf die Systemzeit der Kamera zurückgegriffen. Die Systemzeit einer Kamera wird im Stand der Technik zum Beispiel von einer sogenannten Hardware-Uhr bereitgestellt, die in der Kamera integriert ist. Die Hardware-Uhr besteht aus einem Chip, der im Wesentlichen einen Zählerregister und einen Uhrenquarz als Taktgeber enthält. Der Benutzer stellt die Systemzeit einmal manuell ein und anschließend läuft der von einem Schwingquarz getaktete Zähler immer weiter und bildet die Grundlage für die ausgegebene Systemzeit der Kamera.

Es ist - zumindest im Kontext von Personal Computern (PC's) - ebenfalls bekannt, eine Systemzeit basierend auf einer Software-Uhr bereitzustellen. Bei einer Software-Uhr wird der Zähler vom Betriebssystem (also der Software) geführt und in Datum und Uhrzeit umgerechnet. Eine auf eine Software-Uhr basierte Systemzeit läuft bei ausgeschaltetem Gerät nicht weiter. Eine Software-Uhr muss also nach dem Einschalten erst synchronisiert werden. Sie wird mit der Hardware-Uhr oder auch fortlaufend mit einem Zeitserver abgeglichen.

Prinzipiell ist ein Abgleich (auch: Synchronisierung) der Systemzeit mit einem Zeitserver oder Zeitzeichensender bekannt. Bspw. wird ein ähnlich gelagertes Verfahren, bei der die interne Zeit eines Terminal-Gerätes, bspw. einer Kamera, mit einer Referenz-Zeit eines Servers synchronisiert wird, in der US2017/0111565A1 beschrieben. Der Zeitserver oder Zeitzeichensender sendet hierfür ein Zeitsignal zu dem empfangenden Gerät. Es existiert jedoch in der Regel eine gewisse Abweichung zwischen der Zeit des Zeitgebers, das heißt des Zeitservers oder Zeitzeichensenders, und der Systemzeit. Diese Abweichung beruht auf der Laufzeit des Zeitsignals vom Zeitgeber zum Empfänger. Die Laufzeit - auch als Übertragungszeit oder Latenzzeit bezeichnet - zwischen dem Zeitgeber und dem Empfänger ist in der Regel nicht bekannt. Wird von einem Smartphone mit Kamera beispielsweise ein Bild gemacht, ist es oftmals auch gar nicht genau bekannt, mit welchem Zeitserver das Smartphone seine Systemzeit abstimmt, insbesondere dann, wenn das Smartphone über größere Strecken bewegt wird, z.B. zwischen Europa und Asien.

Zusammenfassend ist also sowohl die Abweichung der Systemzeit mit der Zeit des Zeitgebers als auch die Identität des Zeitgebers für Kameras oftmals nicht bekannt. Es besteht somit der Wunsch, auf ein präzises und zuverlässiges Verfahren zur Bestimmung einer Abweichung einer Zeit einer Kamera von einer Zeit eines Zeitgebers zurückgreifen zu können. Des Weiteren besteht das Bedürfnis nach für das genannte Verfahren geeigneten Kameras sowie für das genannte Verfahren geeigneten Zeitgebern.

Diese Wünsche werden durch die Bereitstellung der Gegenstände der unabhängigen Ansprüche der vorliegenden Anmeldung erfüllt. Variationen und Fortbildungen sind in den abhängigen Ansprüchen offenbart.

Dementsprechend wird ein Verfahren zur Bestimmung einer Abweichung einer Zeit einer Kamera von einer Zeit eines Zeitgebers umfassend die folgenden Schritte bereitgestellt:
- Senden einer Nachricht von der Kamera zu dem Zeitgeber,
- Dokumentieren der Zeit der Kamera zum Zeitpunkt des Absendens der Nachricht,
- Empfangen der Nachricht durch den Zeitgeber,
- Dokumentieren der Zeit des Zeitgebers zum Zeitpunkt des Empfangens der Nachricht,
- Senden einer Antwort von dem Zeitgeber zu der Kamera, wobei die Antwort die Zeit des Zeitgebers zum Zeitpunkt des Empfangens der Nachricht und die Zeit des Zeitgebers zum Zeitpunkt des Absendens der Antwort enthält,
- Empfangen der Antwort durch die Kamera,
- Dokumentieren der Zeit der Kamera zum Zeitpunkt des Empfangens der Antwort,
- Berechnen der Übertragungszeit der Nachricht beziehungsweise der Antwort basierend auf der Zeit der Kamera zum Zeitpunkt des Absendens der Nachricht, der Zeit des Zeitgebers zum Zeitpunkt des Empfangens der Nachricht, der Zeit des Zeitgebers zum Zeitpunkt des Absendens der Antwort und der Zeit der Kamera zum Zeitpunkt des Empfangens der Antwort, und
- Berechnen der Abweichung der Zeit der Kamera von der Zeit des Zeitgebers basierend auf der Übertragungszeit der Nachricht, der Zeit der Kamera zum Zeitpunkt des Absendens der Nachricht und der Zeit des Zeitgebers zum Zeitpunkt des Empfangens der Nachricht.

Die Erfinder sind von dem Problem ausgegangen, dass herkömmliche Kameras nicht in der Lage sind, die Aufnahme eines Bildes mit einer präzisen Information über den Aufnahmezeitpunkt zu versehen. Dies ist besonders dann nachteilig, wenn Bilder mehrerer Kameras von demselben Gegenstand ausgewertet werden, da etwa bei einem sich bewegenden Gegenstand in manchen Anwendungen sichergestellt sein muss, dass die Bilder zu (exakt) demselben Zeitpunkt aufgenommen wurden oder aber etwaige Abweichungen der Aufnahmezeitpunkte zumindest präzise bekannt sind.

Die Erfinder haben erkannt, dass eine Ursache für das Problem der unpräzisen Information über den Aufnahmezeitpunkt eines Bildes daran liegt, dass die Systemzeit der Kamera entweder an sich fehlerbehaftet ist (weil sie z.B. nur einmal am Anfang manuell eingestellt wurde und danach lediglich mit einem Schwingquarz und Zähler weiterläuft) oder die Kamera zwar in regelmäßigen Abständen Zeitsignale eines externen Zeitgebers (Zeitservers oder Zeitzeichensenders) empfängt, die Systemzeit jedoch unpräzise bleibt, da die Übertragungszeit des Zeitsignals vom Zeitgeber zur Kamera unbekannt ist.

Eine Berücksichtigung der Zeitspanne, die das Zeitsignal zur Übertragung vom Zeitgeber zur Kamera benötigt, würde eine präzise Bestimmung des Aufnahmezeitpunkts eines Bildes ermöglichen. Hierfür schlagen die Erfinder ein spezielles Verfahren vor, in dem der Zeitgeber nicht nur wie herkömmlicherweise unidirektional Zeitsignale an die Kamera aussendet, sondern ganz konkret und individuell auf eine mit einem Zeitstempel versehenen Anfrage der Kamera mit einer ebenfalls mit einem Zeitstempel versehenen Antwort reagiert. Sind gewisse Mindestinformationen in der Anfrage der Kamera an den Zeitgeber und in der Antwort des Zeitgebers enthalten, kann durch eine geschickte Berechnung die Übertragungszeit des Zeitsignals vom Zeitgeber an die Kamera berechnet werden.

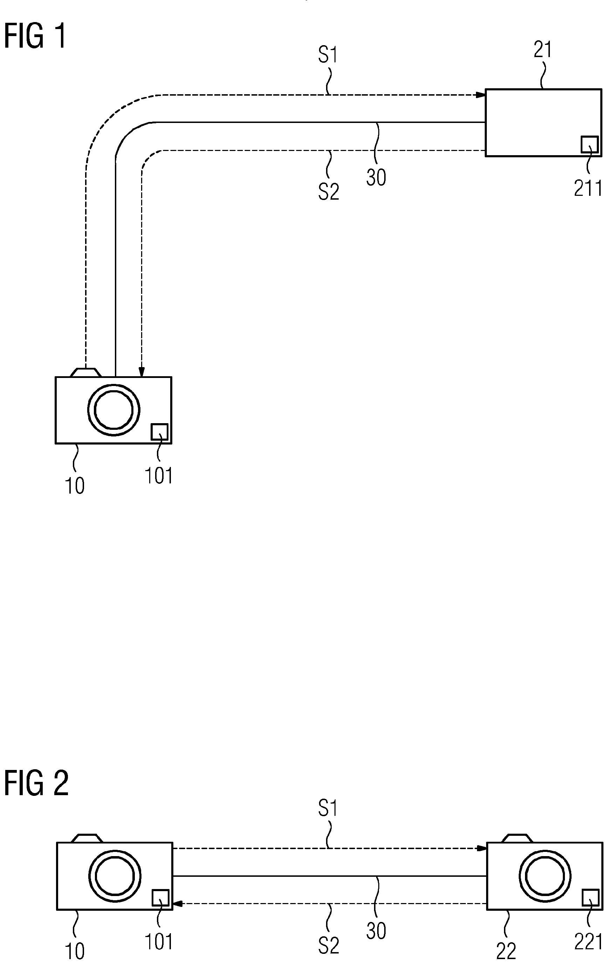

Ein konkretes und anschauliches Beispiel dieses Verfahrens zur Bestimmung der Abweichung der Zeit der Kamera von der Zeit des Zeitgebers ist in der zu Abbildung 1 gehörigen Beschreibung offenbart.

Im Kontext dieser Anmeldung werden die Begriffe "Zeit der Kamera", "Systemzeit der Kamera" und "Kamerazeit" synonym verwendet. Analog dazu werden die Begriffe "Zeit des Zeitgebers", "Systemzeit des Zeitgebers" und "Zeitgeberzeit" synonym verwendet; ebenso werden die Begriffe "Zeit des Zeitservers", "Systemzeit des Zeitservers" und "Zeitserverzeit" synonym verwendet

Das vorgestellte Verfahren ist insbesondere für eine digitale Kamera geeignet. Unter einer digitalen Kamera (auch: Digitalkamera) wird eine Vorrichtung verstanden, die statische oder bewegte Bilder elektronisch auf einem digitalen Speichermedium aufzeichnen oder in Form digitaler Signale als digitale Information ausgeben kann. Dabei erzeugt Licht, das auf einen Bildsensor (auch: Kamerachip oder Sensorchip) fällt, elektrischen Strom, der anschließend mittels eines Prozessors in digitale Information umgewandelt wird.

Die Nachricht, die die Kamera an den Zeitgeber sendet, kann auf unterschiedlichste Weise ausgestaltet sein. Es kann sich in der einfachsten Form um ein bloßes Signal handeln, das von der Kamera an den Zeitgeber gesendet wird und das der Zeitgeber der Kamera zuordnen kann. Der Zeitpunkt des Absendens der Nachricht wird dann beispielsweise von der Kamera separat abgespeichert. Die Nachricht kann aber auch detaillierte Informationen enthalten, beispielsweise Informationen, die eine eindeutige Identifikation der Kamera erlauben. Die Nachricht kann auch bereits die Kamerazeit zum Zeitpunkt des Absendens der Nachricht enthalten; ein separates Abspeichern und Dokumentieren dieser Information ist dann überflüssig.

Auch die Antwort des Zeitgebers auf die Nachricht (Anfrage) der Kamera kann auf unterschiedlichste Weise ausgestaltet sein. Sie muss jedoch die Zeit des Zeitgebers zum Zeitpunkt des Empfangens der Nachricht und die Zeit des Zeitgebers zum Zeitpunkt des Absendens der Antwort in geeigneter Form, z.B. auch in Form von Zeitdifferenzen, enthalten. Diese beiden Informationen sind für die Bestimmung der Übertragungszeit der Nachricht notwendig und müssen somit in der Antwort des Zeitgebers an die Kamera enthalten sein. Selbstverständlich bleibt es dem Fachmann, der das Verfahren konkret realisiert, überlassen, ob er die beiden Informationen beispielsweise in getrennten Nachrichten oder gesammelt in einer Nachricht an die Kamera versendet.

Sobald die Zeit der Kamera zum Zeitpunkt des Absendens der Nachricht, die Zeit des Zeitgebers zum Zeitpunkt des Empfangens der Nachricht, die Zeit des Zeitgebers zum Zeitpunkt des Absendens der Antwort und die Zeit der Kamera zum Zeitpunkt des Empfangens der Antwort vorliegen, kann die Übertragungszeit der Nachricht beziehungsweise die Übertragungszeit der Antwort berechnet werden.

Unter der Übertragungszeit der Nachricht bzw. der Antwort wird die Zeitspanne verstanden, die die Nachricht bzw. die Antwort benötigt, um von dem Sender zum Empfänger übertragen zu werden. Die Übertragungszeit kann auch als Verzögerungszeit, Signallaufzeit, Latenzzeit oder Reaktionszeit bezeichnet werden.

Es wird insbesondere davon ausgegangen, dass die Übertragungszeit der Nachricht zwischen der Kamera und dem Zeitgeber und die Übertragungszeit der Antwort zwischen dem Zeitgeber und der Kamera gleich ist. Dies ist offensichtlich nicht in allen Systemen zwingend der Fall. So ist es beispielsweise denkbar, dass die Nachricht, die von der Kamera zu dem Zeitgeber verschickt wird, einen anderen Signalweg nimmt (und somit eine andere Übertragungszeit benötigt) als die Antwort, die von dem Zeitgeber an die Kamera verschickt wird.

In vielen praktischen Anwendungen kann jedoch von einer identischen oder nahezu identischen Übertragungszeit ausgegangen werden. Dies gilt umso mehr für eine Anordnung mit einem Zeitgeber, der sich in einem lokalen Netz befindet, in dem die Übertragungswege zwischen Kamera und Zeitgeber sowie *vice versa* kurz sind. Die Platzierung des Zeitgebers in einem lokalen Netz stellt eine bevorzugte Ausführungsform der Erfindung dar.

Die Übertragungszeit kann insbesondere mittels der folgenden Schritte berechnet werden:
- Subtrahieren der Zeit der Kamera zum Zeitpunkt des Absendens der Nachricht von der Zeit der Kamera zum Zeitpunkt des Empfangens der Antwort, um eine im System der Kamera insgesamt verstrichene Zeit zu berechnen,
- Subtrahieren der Zeit des Zeitgebers zum Zeitpunkt des Empfangens der Nachricht von der Zeit des Zeitgebers zum Zeitpunkt des Absendens der Antwort, um eine Bearbeitungszeit der Nachricht im System des Zeitgebers zu berechnen,
- Subtrahieren der berechneten Bearbeitungszeit der Nachricht im System des Zeitgebers von der berechneten im System der Kamera insgesamt verstrichenen Zeit, um eine insgesamt für Übertragen der Nachricht und der Antwort verstrichene Zeit zu berechnen, und
- Dividieren der berechneten insgesamt für Übertragen der Nachricht und der Antwort verstrichenen Zeit durch zwei, um die Übertragungszeit der Nachricht von der Kamera zum Zeitgeber zu berechnen.

Die Schritte müssen nicht notwendigerweise in der angegebenen Reihenfolge durchgeführt werden.

In einem Schritt wird die gesamte Zeit berechnet, die im Zeitsystem der Kamera zwischen dem Absenden der Nachricht an den Zeitgeber und dem Empfangen der Antwort vom Zeitgeber verstrichen ist.

Von dieser Zeit wird die Bearbeitungszeit der Nachricht, also die Zeit zwischen dem Empfangen der Nachricht im Zeitgeber und dem Absenden der Antwort, abgezogen.

Als Resultat erhält man die Zeitspanne, die für das Übertragen der Nachricht und das Übertragen der Antwort benötigt wurden.

Unter der bereits erwähnten Annahme, dass beide Übertragungszeiten gleich groß sind, erhält man die Zeitspanne, die die Antwort vom Zeitgeber zur Kamera benötigte, durch Dividieren der gesamten Zeitspanne für das Übertragen beider Signale durch zwei.

In Kenntnis der Übertragungszeit der Nachricht von der Kamera zu dem Zeitgeber kann die Abweichung der Zeit der Kamera von der Zeit des Zeitgebers insbesondere mittels der folgenden Schritte berechnet werden:
- Subtrahieren der Zeit der Kamera zum Zeitpunkt des Absendens der Nachricht von der Zeit des Zeitgebers zum Zeitpunkt des Empfangens der Nachricht, um eine brutto-Abweichung zu berechnen, und
- Subtrahieren der Übertragungszeit der Nachricht von der Kamera zum Zeitgeber von der berechneten brutto-Abweichung, um die Abweichung der Zeit der Kamera von der Zeit des Zeitgebers zu berechnen.

Unter der Annahme identischer Übertragungszeiten von Nachricht und Antwort kann die Abweichung der Zeit der Kamera von der Zeit des Zeitgebers auch mittels der folgenden Schritte berechnet werden:
- Subtrahieren der Zeit der Kamera zum Zeitpunkt des Empfangens der Antwort von der Zeit des Zeitgebers zum Zeitpunkt des Versendens der Antwort, um eine brutto-Abweichung zu berechnen, und
- Subtrahieren der Übertragungszeit der Antwort von dem Zeitgeber zu der Kamera von der berechneten brutto-Abweichung, um die Abweichung der Zeit der Kamera von der Zeit des Zeitgebers zu berechnen.

In beiden Alternativen wird zunächst eine sogenannte brutto-Abweichung zwischen der Kamerazeit und der Zeit des Zeitgebers berechnet. Diese wird dann durch Berücksichtigung der Übertragungszeit der Nachricht bzw. der Antwort reduziert. Als Resultat verbleibt die Abweichung der Kamerazeit von der Zeit des Zeitgebers an sich.

Der Zeitgeber kann beispielsweise ein Zeitserver oder ein Zeitzeichensender sein.

Ein Zeitserver liefert die aktuelle Zeit (beispielsweise über einen entsprechenden Zeitstempel) an unterschiedliche Nutzer, die in diesem Zusammenhang auch als Clients bezeichnet werden. Es gibt öffentliche Zeitserver, die von der Atomuhr der Physikalisch-Technischen Bundesanstalt in Braunschweig betrieben werden, die für die in Deutschland gesetzliche Zeit maßgebend sind. Des Weiteren gibt es auch nicht-öffentliche Zeitserver, die zur Synchronisation aktuelle Zeitstempel von anderen Zeitservern oder von anderen hochgenauen Zeitgebern heranziehen.

Als Zeitzeichensender wird eine Sendeanlage bezeichnet, welche die aktuell gültige Zeit als Information in maschinenverarbeitbarer (digitaler) Form ausstrahlt. Ein Beispiel eines Zeitzeichensenders ist der deutsche Langwellensender DCF77, der ein Langwellensender in Mainflingen bei Frankfurt am Main, der die meisten funkgesteuerten Uhren im westlichen Europa mit der in Deutschland geltenden gesetzlichen (Uhr-)Zeit versorgt. Die Sendefrequenz des DCF77 beträgt 77,5 kHz.

Prinzipiell können die Kamera und der Zeitgeber durch ein kabelgebundenes oder drahtloses öffentliches Netz verbunden sein. Die Kamera kann beispielsweise mit einem öffentlichen Zeitserver via Internet oder mit DCF77 über Funk verbunden sein.

In einer bevorzugten Ausführungsform der Erfindung befinden sich die Kamera und der Zeitgeber jedoch in einem kabelgebundenen oder drahtlosen lokalen Netz.

Unter einem lokalen Netz *(englisch: Local Area Network, LAN)* wird ein Rechnernetz verstanden, dessen Ausdehnung beschränkt ist. Es handelt sich bei einem lokalen Netz insbesondere um ein Firmennetz. Weist die Firma mehrere (geographische) Standorte auf, kann es sich bei dem lokalen Netz auch um nur den Teil des Firmennetzes handeln, der einen Standort der Firma umfasst.

Bei dem lokalen Netz handelt es sich insbesondere um ein gesichertes lokales Netz.

Ein Vorteil davon, wenn sich der Zeitgeber und die Kamera in demselben lokalen Netz befinden, sind zum einen die kurzen Übertragungszeiten einer Nachricht bzw. Antwort zwischen dem Zeitgeber und der Kamera. Ein weiterer wichtiger Vorteil insbesondere eines gesicherten lokalen Netzes ist, dass Informationen über die Abweichung der Zeit der Kamera von der Zeit des Zeitgebers und eventuell Informationen über die Aufnahmezeitpunkte von Bildern, die mit der Kamera gemacht wurden, nicht über das öffentliche Internet übertragen werden.

In einer weiteren Ausführungsform der Erfindung nimmt eine weitere Kamera selbst die Rolle des Zeitgebers ein. Diejenige Kamera, die für die andere Kamera als Zeitgeber fungiert, kann als "Master-Kamera" bezeichnet werden; die andere Kamera als "Slave-Kamera". Vorteilhafterweise wird als Master-Kamera eine Kamera mit einer besonders exakten Kamerazeit verwendet, da diese ja als Zeitgeber für die andere(n) Kamera(s) dient.

Die Erfindung betrifft nicht nur ein Verfahren zur Bestimmung einer Abweichung einer Kamerazeit von einer Zeit eines Zeitgebers, sondern auch eine für das genannte Verfahren geeignete Kamera sowie ein für das genannte Verfahren geeigneten Zeitgeber.

Eine solche Kamera ist gekennzeichnet durch eine Verarbeitungseinheit, die dafür eingerichtet ist, die folgenden Schritte auszuführen, um eine Abweichung einer Zeit der Kamera von einer Zeit eines Zeitgebers zu bestimmen:
- Senden einer Nachricht von der Kamera zu dem Zeitgeber,
- Dokumentieren der Zeit der Kamera zum Zeitpunkt des Absendens der Nachricht,
- Empfangen einer Antwort des Zeitgebers, wobei die Antwort die Zeit des Zeitgebers zum Zeitpunkt des Empfangens der Nachricht und die Zeit des Zeitgebers zum Zeitpunkt des Absendens der Antwort enthält,
- Dokumentieren der Zeit der Kamera zum Zeitpunkt des Empfangens der Antwort,
- Bestimmen der Übertragungszeit der Nachricht beziehungsweise der Antwort basierend auf der Zeit der Kamera zum Zeitpunkt des Absendens der Nachricht, der Zeit des Zeitgebers zum Zeitpunkt des Empfangens der Nachricht, der Zeit des Zeitgebers zum Zeitpunkt des Absendens der Antwort und der Zeit der Kamera zum Zeitpunkt des Empfangens der Antwort, und
- Bestimmen der Abweichung der Zeit der Kamera von der Zeit des Zeitgebers basierend auf der Übertragungszeit der Nachricht, der Zeit der Kamera zum Zeitpunkt des Absendens der Nachricht und der Zeit des Zeitgebers zum Zeitpunkt des Empfangens der Nachricht.

Ein solcher Zeitgeber ist ebenfalls gekennzeichnet durch eine Verarbeitungseinheit, wobei die Verarbeitungseinheit des Zeitgebers (im Unterschied zu der Verarbeitungseinheit der Kamera) dafür eingerichtet ist, die folgenden Schritte auszuführen:
- Empfangen einer Nachricht von einer solchen Kamera,
- Dokumentieren der Zeit des Zeitgebers zum Zeitpunkt des Empfangens der Nachricht, und
- Senden einer Antwort von dem Zeitgeber zu der Kamera, wobei die Antwort die Zeit des Zeitgebers zum Zeitpunkt des Empfangens der Nachricht und die Zeit des Zeitgebers zum Zeitpunkt des Absendens der Antwort enthält.

Eine vorteilhafte Verwendung einer Kamera, die fähig ist, die Abweichung ihrer eigenen Systemzeit, also der Kamerazeit, sehr präzise bezüglich eines Zeitgebers zu bestimmen, ist die Verwendung in einem Verfahren zur koordinierten Aufnahme mehrerer Bilder von mehreren Kameras.

Hierfür sind eine erste Kamera und eine zweite Kamera notwendig, wobei der erste Schritt darin besteht, dass beide Kameras die Abweichung ihrer jeweiligen Zeit von einem Zeitgeber bestimmen. Der Zeitgeber kann, wie oben bereits allgemein erläutert, z.B. ein (interner oder externer) Zeitserver, eine Zeitzeichensender oder eine weitere Kamera (eine sogenannte "Master-Kamera") sein. Die Bestimmung der Abweichung erfolgt mittels des in dieser Anmeldung ebenfalls bereits ausführlich erläuterten Verfahrens. Als Resultat kennt jede Kamera sehr präzise ihre jeweilige Abweichung von der Zeit des gemeinsamen Zeitgebers.

In einem nächsten Schritt nimmt die erste Kamera genau dann ein erstes Bild auf, wenn die Zeit der ersten Kamera einem vorgegebenen ersten Zeitpunkt entspricht, und die zweite Kamera nimmt genau dann ein zweites Bild auf, wenn die Zeit der zweiten Kamera einem vorgegebenen zweiten Zeitpunkt entspricht. Aufgrund der zuvor hochpräzise bestimmten Abweichung beider Kameras bezüglich des gemeinsam Zeitgebers ist es möglich, die Aufnahmezeitpunkte beider Kameras hochpräzise aufeinander abzustimmen. Auf diese Weise sind beispielsweise im Bereich der 3D-Rekonstruktion von Objekten Genauigkeiten möglich, die so im Stand der Technik nicht, oder nur mit ungleich höherem Aufwand, möglich waren.

In diesem Zusammenhang wird als aus dem Stand der Technik bekannt vorausgesetzt, eine koordinierte Aufnahme mehrerer Bilder von mehreren Kameras dadurch zu erreichen, dass die Kameras von einem gemeinsamen Trigger zur Bildaufnahme veranlasst werden. Das erfindungsgemäße Verfahren der koordinierten Bildaufnahme unterscheidet sich von diesem Stand der Technik dadurch, dass zur koordinierten Aufnahme kein gemeinsamer Trigger benötigt wird. Es wird nämlich lediglich eine erste Kamera benötigt, deren Abweichung von einem Zeitgeber präzise bekannt ist und eine zweite Kamera, deren Abweichung von demselben Zeitgeber ebenfalls präzise bekannt ist. Zur koordinierten Bildaufnahme wird dann einfach nur vorgegeben, wann die erste Kamera in ihrer Kamerazeit ihr Bild machen soll und wann die zweite Kamera in ihrer Kamerazeit ihr Bild machen soll.

Grundsätzlich gilt, dass es bei einem Vergleich der Zeit (in anderen Worten: des Zeitpunkts), zu der ein erstes Bild von einer ersten Kamera und ein zweites Bild von einer zweiten Kamera gemacht wird, nicht primär darauf ankommt, ob die gemeinsame Zeitbasis, das heißt, die Zeit des Zeitgebers, auf die sich die beiden Kameras beziehen, global stimmt. Es ist völlig ausreichend, wenn die gemeinsame Zeitbasis eine lokale Zeitbasis ist. Entscheidend bei einem Zeitvergleich ist, dass sich die Abweichungen beider Kamerazeiten auf eine gemeinsame Zeitbasis beziehen - in vorliegender Erfindung diejenige, die von dem Zeitgeber vorgegeben wird.

In einer Ausführungsform des Verfahrens weist die erste Kamera einen ersten Erfassungsbereich und die zweite Kamera einen zweiten Erfassungsbereich auf, und der erste und zweite Erfassungsbereich überlappen sich zumindest teilweise. Insbesondere nimmt dabei die erste Kamera mit dem ersten Bild einen Gegenstand aus einer ersten Perspektive auf und die zweite Kamera nimmt mit dem zweiten Bild denselben Gegenstand aus einer zweiten Perspektive auf.

Für die koordinierte Aufnahme der Bilder ist es möglich, nicht nur die Aufnahmezeitpunkte vorzugeben, sondern auf weitere Aufnahmeparameter, wie Belichtungszeit, Öffnung der Blende, Zoom, etc.

Nachfolgend wird die Erfindung anhand der beigefügten Abbildungen veranschaulicht. Die Abbildungen zeigen beispielhaft und schematisch ausgewählte Ausführungsformen ohne Beschränkung des beanspruchten Schutzumfangs.

Die Abbildungen zeigen:
- Fig. 1:: Kamera und interner Zeitserver in einem lokalen Netz; und
- Fig. 2:: Kamera und weitere, als Zeitgeber fungierende Kamera in einem lokalen Netz.

Die Abbildung 1, auch als Fig. 1 abgekürzt, zeigt eine digitale Kamera 10, die sich gemeinsam mit einem internen Zeitserver 21 in einem lokalen Netz befindet. Das Netz wird als lokales Netz bezeichnet, da es lediglich Geräte miteinander verbindet, die sich innerhalb eines Standorts derselben Firma befinden.

Die Kamera 10 ist mit dem internen Zeitserver 21 signaltechnisch verbunden. Bei der Verbindung, in Abbildung 1 mit der durchgezogenen Linie 30 symbolisiert, kann es sich beispielsweise um eine drahtlose lokale Netzwerk-Verbindung handeln.

Die Abweichung der Zeit der Kamera von der Zeit des internen Zeitservers soll nun bestimmt werden. Dies wird folgendermaßen durchgeführt:
In einem ersten Schritt S1 wird eine Nachricht von der Kamera 10 zu dem internen Zeitserver 21 gesendet. Der Zeitpunkt des Absendens der Nachricht wird von einer Verarbeitungseinheit 101 der Kamera 10 dokumentiert. Um ein konkretes Beispiel zu geben, betrage die Zeit zum Zeitpunkt des Absendens der Nachricht 9:00:00,00 (in Worten: 9 Uhr 0 Minuten 0,00 Sekunden) in der Zeit der Kamera 10.

Die Nachricht wird anschließend von dem internen Zeitserver 21 empfangen. Auch hier wird wieder der Zeitpunkt bestimmt, zu dem die Nachricht vom Zeitserver 21 empfangen wird. Die Zeit des Zeitservers 21 zum Zeitpunkt des Empfangens der Nachricht wird von einer Verarbeitungseinheit 211 des internen Zeitservers 21 dokumentiert. Die Zeit des Zeitservers 21 zum Zeitpunkt des Empfangens der Nachricht betrage, um obiges Beispiel weiterzuführen, 9:00:00,60 (in Worten: 9 Uhr 0 Minuten 0,60 Sekunden) in der Zeit des Zeitservers 21.

Die Nachricht der Kamera 10 wird nun vom internen Zeitserver 21 beantwortet. Nach einer (kurzen) Bearbeitungszeit, nämlich um 9:00:00,75 (in Worten: 9 Uhr 0 Minuten 0,75 Sekunden) in der Zeit des Zeitservers 21 sendet der Zeitserver 21 seine Antwort an die Kamera (dieser Schritt ist in Abbildung 1 als S2 referenziert). Die Antwort enthält sinngemäß die folgenden Informationen: "Ich (der Zeitserver 21) habe um 9:00:00,60 meiner Zeit deine Nachricht (d.h. die Nachricht der Kamera 10) erhalten. Ich sende dir nun, um 9:00:00,75 meiner Zeit, diese Antwort zurück."

Die Antwort des internen Zeitservers 21 inklusive der oben angegebenen Informationen wird um 9:00:00,35 in der Zeit der Kamera 10 von der Kamera 10 empfangen. Dieser Zeitpunkt (9:00:00,35 in der Zeit der Kamera 10) wird wiederum von der Verarbeitungseinheit 101 der Kamera 10 dokumentiert.

Aus den vorliegenden Informationen kann nun die Abweichung der Zeit der Kamera 10 von der Zeit des Zeitservers 21 bestimmt werden: Zunächst wird die Übertragungszeit der Nachricht von der Kamera 10 zum Zeitserver 21 bzw. die Übertragungszeit der Antwort vom Zeitserver 21 zur Kamera 10 berechnet. Beide Übertragungszeiten werden als identisch angenommen, so dass von einer allgemeinen Übertragungszeit gesprochen werden kann. Die Übertragungszeit wird konkret dadurch bestimmt, dass zunächst die im System der Kamera 10 insgesamt verstrichene Zeit zwischen dem Absenden der Nachricht durch die Kamera 10 und dem Empfangen der Antwort durch die Kamera 10 berechnet wird. In vorliegendem Beispiel beträgt diese insgesamt verstrichene Zeit 0,35 Sekunden (9:00:00,35 Kamerazeit minus 9:00:00,00 Kamerazeit). Anschließend wird die Bearbeitungszeit der Nachricht im System des Zeitservers 21 berechnet. In vorliegendem Beispiel beträgt die Bearbeitungszeit der Nachricht 0,15 Sekunden (9:00:00,75 Zeitserverzeit minus 9:00:00,60 Zeitserverzeit).

Um die insgesamt für das Übertragen der Nachricht und der Antwort verstrichene Zeit zu berechnen, wird im Folgenden einfach die Bearbeitungszeit der Nachricht von der insgesamt verstrichenen Zeit zwischen dem Absenden der Nachricht und dem Empfangen der Antwort abgezogen. Im vorliegenden Beispiel resultiert daraus 0,20 Sekunden für die insgesamt für das Übertragen der Nachricht und der Antwort verstrichene Zeit (0,35 Sekunden minus 0,15 Sekunden).

Da die Übertragungszeit der Nachricht von der Kamera 10 zu dem Zeitserver 21 und die Übertragungszeit der Antwort vom Zeitserver 21 zu der Kamera 10 als identisch angenommen werden, resultiert als (einfache) Übertragungszeit der Antwort von dem Zeitserver 21 zur Kamera 10 die Zeit 0,10 Sekunden (0,20 Sekunden geteilt durch 2).

Mit dieser Information kann nun die Abweichung der Zeit der Kamera 10 von der Zeit des Zeitservers 21 berechnet werden. Zunächst wird eine sogenannte brutto-Abweichung berechnet, in dem die Zeit der Kamera 10 zum Zeitpunkt des Absendens der Nachricht von der Zeit des Zeitservers 21 zum Zeitpunkt des Empfangens der Nachricht abgezogen wird. In vorliegendem Beispiel wird für die brutto-Abweichung 0,60 Sekunden berechnet (9:00:00,60 Zeitserverzeit minus 9:00:00,00 Kamerazeit). Anschließend wird von dieser brutto-Abweichung noch die Übertragungszeit der Nachricht abgezogen, um final die Abweichung der Zeit der Kamera 10 von der Zeit des Zeitservers 21 zu bestimmen. In vorliegendem Beispiel beträgt also die Abweichung der Zeit der Kamera 10 von der Zeit des Zeitservers 21 0,50 Sekunden (0,60 Sekunden minus 0,10 Sekunden). In anderen Worten geht die "Uhr" der Kamera 10 bezüglich der "Uhr" des internen Zeitservers 21 um 0,50 Sekunden nach. Selbstverständlich ist das vorgestellte Verfahren sowohl für ein "Vorgehen" als auch für ein "Nachgehen" der Kamerazeit bezüglich der Zeitserverzeit anwendbar.

Mittels dieses Verfahrens erhält man also eine präzise Information darüber, um wieviel die Zeit einer Kamera relativ zu der Zeit eines Zeitgebers abweicht.

Die Abbildung 2, auch als Fig. 2 abgekürzt, zeigt eine digitale Kamera 10, die sich gemeinsam mit einer weiteren digitalen Kamera 22 in einem lokalen Netz befindet. Das Netz ist, wie in dem in Abbildung 1 illustrierten Ausführungsbeispiel ein lokales Netz, dass (lediglich) Geräte derselben Firma innerhalb eines Standorts miteinander verbindet. Die signaltechnische Verbindung zwischen der Kamera 10 und der weiteren Kamera 22 ist, wie in Abbildung 1, mit dem Bezugszeichen 30 referenziert.

Im Unterschied zu Abbildung 1 fungiert in Abbildung 2 kein interner Zeitserver, sondern die weitere Kamera 22 als Zeitgeber für die Kamera 10. Die weitere Kamera 22 weist also eine Verarbeitungseinheit 221 auf, die dazu geeignet ist, eine Nachricht der Kamera 10 zu empfangen, ihre eigene Zeit zum Zeitpunkt des Empfangens der Nachricht zu dokumentieren und eine Antwort auf die Nachricht zu der Kamera 10 abzusenden, wobei die Antwort die Zeit der weiteren Kamera 22 zum Zeitpunkt des Empfangens der Nachricht und die Zeit der weiteren Kamera 22 zum Zeitpunkt des Absendens der Antwort enthält.

Die Kamera 10 in dem in Abbildung 2 gezeigten Ausführungsbeispiel ist identisch zu dem in Abbildung 1 beschriebenen Ausführungsbeispiel. Auch das Verfahren zur Bestimmung einer Abweichung der Zeit der Kamera 10 von der Zeit der weiteren Kamera 22 ist für beide Ausführungsbeispiele gleich, wobei lediglich der interne Zeitserver durch die weitere Kamera 22 zu ersetzen ist.

Vorteilhafterweise hat die weitere Kamera 22 eine sehr präzise "Systemzeit", die als Hardware-Zeit realisiert und/oder mit einem externen, beispielsweise öffentlichen, Zeitserver oder Zeitzeichensender synchronisiert ist. Die weitere Kamera 22 fungiert in dem lokalen Netz hinsichtlich der Kamera 10 als "Master-Kamera"; letztere kann dementsprechend als "Slave-Kamera" bezeichnet werden.

## Patentansprüche

1. Verfahren zur Bestimmung einer Abweichung einer Zeit einer Kamera (10) von einer Zeit eines Zeitgebers umfassend die folgenden Schritte:
- Senden (S1) einer Nachricht von der Kamera (10) zu dem Zeitgeber,
- Dokumentieren der Zeit der Kamera (10) zum Zeitpunkt des Absendens der Nachricht,
- Empfangen der Nachricht durch den Zeitgeber,
- Dokumentieren der Zeit des Zeitgebers zum Zeitpunkt des Empfangens der Nachricht,
- Senden (S2) einer Antwort von dem Zeitgeber zu der Kamera (10), wobei die Antwort die Zeit des Zeitgebers zum Zeitpunkt des Empfangens der Nachricht und die Zeit des Zeitgebers zum Zeitpunkt des Absendens der Antwort enthält,
- Empfangen der Antwort durch die Kamera (10),
- Dokumentieren der Zeit der Kamera (10) zum Zeitpunkt des Empfangens der Antwort,
- Berechnen der Übertragungszeit der Nachricht beziehungsweise der Antwort basierend auf der Zeit der Kamera (10) zum Zeitpunkt des Absendens der Nachricht, der Zeit des Zeitgebers zum Zeitpunkt des Empfangens der Nachricht, der Zeit des Zeitgebers zum Zeitpunkt des Absendens der Antwort und der Zeit der Kamera (10) zum Zeitpunkt des Empfangens der Antwort, und
- Berechnen der Abweichung der Zeit der Kamera (10) von der Zeit des Zeitgebers basierend auf der Übertragungszeit der Nachricht, der Zeit der Kamera (10) zum Zeitpunkt des Absendens der Nachricht und der Zeit des Zeitgebers zum Zeitpunkt des Empfangens der Nachricht.

2. Verfahren nach Anspruch 1,
wobei die Übertragungszeit durch Ausführung der folgenden Schritte berechnet wird:
- Subtrahieren der Zeit der Kamera (10) zum Zeitpunkt des Absendens der Nachricht von der Zeit der Kamera (10) zum Zeitpunkt des Empfangens der Antwort, um eine im System der Kamera (10) insgesamt verstrichene Zeit zu berechnen,
- Subtrahieren der Zeit des Zeitgebers zum Zeitpunkt des Empfangens der Nachricht von der Zeit des Zeitgebers zum Zeitpunkt des Absendens der Antwort, um eine Bearbeitungszeit der Nachricht im System des Zeitgebers zu berechnen,
- Subtrahieren der berechneten Bearbeitungszeit der Nachricht im System des Zeitgebers von der berechneten im System der Kamera (10) insgesamt verstrichenen Zeit, um eine insgesamt für Übertragen der Nachricht und der Antwort verstrichene Zeit zu berechnen, und
- Dividieren der berechneten insgesamt für Übertragen der Nachricht und der Antwort verstrichenen Zeit durch zwei, um die Übertragungszeit der Antwort von dem Zeitgeber zur Kamera (10) zu berechnen.

3. Verfahren nach einem der vorhergehenden Ansprüche,
wobei die Abweichung der Zeit der Kamera (10) von der Zeit des Zeitgebers basierend auf einer bekannten Übertragungszeit der Nachricht von der Kamera (10) zum Zeitgeber durch Ausführung der folgenden Schritte berechnet wird:
- Subtrahieren der Zeit der Kamera (10) zum Zeitpunkt des Absendens der Nachricht von der Zeit des Zeitgebers zum Zeitpunkt des Empfangens der Nachricht, um eine brutto-Abweichung zu berechnen, und
- Subtrahieren der Übertragungszeit der Nachricht von der Kamera (10) zum Zeitgeber von der berechneten brutto-Abweichung, um die Abweichung der Zeit der Kamera (10) von der Zeit des Zeitgebers zu berechnen.

4. Verfahren nach einem der vorhergehenden Ansprüche,
wobei der Zeitgeber ein Zeitserver (21), ein Zeitzeichensender oder eine weitere Kamera (22) ist.

5. Verfahren nach einem der vorhergehenden Ansprüche,
wobei sich die Kamera (10) und der Zeitgeber in einem kabelgebundenen oder drahtlosen lokalen Netz, insbesondere einem gesicherten lokalen Netz, befinden.

6. Kamera (10) mit einer Verarbeitungseinheit (101), wobei die Verarbeitungseinheit (101) der Kamera (10) dafür eingerichtet ist, die folgenden Schritte auszuführen, um eine Abweichung einer Zeit der Kamera (10) von einer Zeit eines Zeitgebers zu bestimmen:
- Senden (S1) einer Nachricht von der Kamera (10) zu dem Zeitgeber,
- Dokumentieren der Zeit der Kamera (10) zum Zeitpunkt des Absendens der Nachricht,
- Empfangen einer Antwort des Zeitgebers, wobei die Antwort die Zeit des Zeitgebers zum Zeitpunkt des Empfangens der Nachricht und die Zeit des Zeitgebers zum Zeitpunkt des Absendens der Antwort enthält,
- Dokumentieren der Zeit der Kamera (10) zum Zeitpunkt des Empfangens der Antwort,
- Bestimmen der Übertragungszeit der Nachricht beziehungsweise der Antwort basierend auf der Zeit der Kamera (10) zum Zeitpunkt des Absendens der Nachricht, der Zeit des Zeitgebers zum Zeitpunkt des Empfangens der Nachricht, der Zeit des Zeitgebers zum Zeitpunkt des Absendens der Antwort und der Zeit der Kamera (10) zum Zeitpunkt des Empfangens der Antwort, und
- Bestimmen der Abweichung der Zeit der Kamera (10) von der Zeit des Zeitgebers basierend auf der Übertragungszeit der Nachricht, der Zeit der Kamera (10) zum Zeitpunkt des Absendens der Nachricht und der Zeit des Zeitgebers zum Zeitpunkt des Empfangens der Nachricht.

7. Zeitgeber mit einer Verarbeitungseinheit, wobei die Verarbeitungseinheit des Zeitgebers dafür eingerichtet ist, die folgenden Schritte auszuführen:
- Empfangen einer Nachricht von einer Kamera (10) nach Anspruch 6,
- Dokumentieren der Zeit des Zeitgebers zum Zeitpunkt des Empfangens der Nachricht, und
- Senden (S2) einer Antwort von dem Zeitgeber zu der Kamera (10), wobei die Antwort die Zeit des Zeitgebers zum Zeitpunkt des Empfangens der Nachricht und die Zeit des Zeitgebers zum Zeitpunkt des Absendens der Antwort enthält.

8. Verfahren zur Steuerung einer koordinierten Aufnahme mehrerer Bilder von mehreren Kameras, wobei die mehreren Kameras eine erste Kamera nach Anspruch 6 und eine zweite Kamera nach Anspruch 6 umfassen, und wobei das Verfahren die folgenden Schritte aufweist:
- Bestimmung einer Abweichung einer Zeit der ersten Kamera von einer Zeit eines Zeitgebers,
- Bestimmung einer Abweichung einer Zeit der zweiten Kamera von der Zeit desselben Zeitgebers,
- Veranlassen einer Aufnahme eines ersten Bildes mittels der ersten Kamera, wenn die Zeit der ersten Kamera einem vorgegebenen ersten Zeitpunkt entspricht, und
- Veranlassen einer Aufnahme eines zweiten Bildes mittels der zweiten Kamera, wenn die Zeit der zweiten Kamera einem vorgegebenen zweiten Zeitpunkt entspricht.

9. Verfahren nach Anspruch 8,
wobei die erste Kamera einen ersten Erfassungsbereich und die zweite Kamera einen zweiten Erfassungsbereich aufweist, und sich der erste und zweite Erfassungsbereich zumindest teilweise überlappen.

10. Verfahren nach einem der Ansprüche 8 oder 9,
wobei die erste Kamera mit dem ersten Bild einen Gegenstand aus einer ersten Perspektive aufnimmt und die zweite Kamera mit dem zweiten Bild denselben Gegenstand aus einer zweiten Perspektive aufnimmt.

11. Verfahren nach einem der Ansprüche 8 bis 10,
wobei die Aufnahme des ersten Bildes mit vorgegebenen ersten Aufnahmeparametern erfolgt und die Aufnahme des zweiten Bildes mit vorgegebenen zweiten Aufnahmeparametern erfolgt.

## Claims

1. Method for determining a deviation of a time of a camera (10) from a time of a timer, comprising the following steps:
- transmitting (S1) a message from the camera (10) to the timer,
- documenting the time of the camera (10) at the point in time at which the message is transmitted,
- receiving the message by means of the timer,
- documenting the time the timer at the point in time at which the message is received,
- transmitting (S2) a response from the timer to the camera (10), wherein the response contains the time of the timer at the point in time at which the message is received and the time of the timer at the point in time at which the response is transmitted,
- receiving the response by means of the camera (10),
- documenting the time of the camera (10) at the point in time at which the response is received,
- calculating the transmission time of the message or of the response on the basis of the time of the camera (10) at the point in time at which the message is transmitted, the time of the timer at the point in time at which the message is received, the time of the timer at the point in time at which the response is transmitted and the time of the camera (10) at the point in time at which the response is received, and
- calculating the deviation of the time of the camera (10) from the time of the timer on the basis of the transmission time of the message, the time of the camera (10) at the point in time at which the message is transmitted and the time of the timer at the point in time at which the message is received.

2. Method according to Claim 1,
wherein the transmission time is calculated by carrying out the following steps:
- subtracting the time of the camera (10) at the point in time at which the message is transmitted from the time of the camera (10) at the point in time at which the response is received in order to calculate a time which has elapsed overall in the system of the camera (10),
- subtracting the time of the timer at the point in time at which the message is received from the time of the timer at the point in time at which the response is transmitted in order to calculate a processing time of the message in the system of the timer,
- subtracting the calculated processing time of the message in the system of the timer from the calculated time which has elapsed overall in the system of the camera (10) in order to calculate a time which has elapsed overall for transmission of the message and the response, and
- dividing the calculated time which has elapsed overall for transmission of the message and the response by two in order to calculate the transmission time of the response from the timer to the camera (10).

3. Method according to one of the preceding claims,
wherein the deviation of the time of the camera (10) from the time of the timer is calculated on the basis of a known transmission time of the message from the camera (10) to the timer by carrying out the following steps:
- subtracting the time of the camera (10) at the point in time at which the message is transmitted from the time of the timer at the point in time at which the message is received in order to calculate a gross deviation, and
- subtracting the transmission time of the message from the camera (10) to the timer from the calculated gross deviation in order to calculate the deviation of the time of the camera (10) from the time of the timer.

4. Method according to one of the preceding claims,
wherein the timer is a time server (21), a time signal transmitter or a further camera (22).

5. Method according to one of the preceding claims,
wherein the camera (10) and the timer are in a wired or wireless local area network, in particular a secure local area network.

6. Camera (10) having a processing unit (101), wherein the processing unit (101) of the camera (10) is configured to carry out the following steps in order to determine a deviation of a time of the camera (10) from a time of a timer:
- transmitting (S1) a message from the camera (10) to the timer,
- documenting the time of the camera (10) at the point in time at which the message is transmitted,
- receiving a response from the timer, wherein the response contains the time of the timer at the point in time at which the message is received and the time of the timer at the point in time at which the response is transmitted,
- documenting the time of the camera (10) at the point in time at which the response is received,
- determining the transmission time of the message or of the response on the basis of the time of the camera (10) at the point in time at which the message is transmitted, the time of the timer at the point in time at which the message is received, the time of the timer at the point in time at which the response is transmitted and the time of the camera (10) at the point in time at which the response is received, and
- determining the deviation of the time of the camera (10) from the time of the timer on the basis of the transmission time of the message, the time of the camera (10) at the point in time at which the message is transmitted and the time of the timer at the point in time at which the message is received.

7. Timer having a processing unit, wherein the processing unit of the timer is configured to carry out the following steps:
- receiving a message from a camera (10) according to Claim 6,
- documenting the time of the timer at the point in time at which the message is received, and
- transmitting (S2) a response from the timer to the camera (10), wherein the response contains the time of the timer at the point in time at which the message is received and the time of the timer at the point in time at which the response is transmitted.

8. Method for controlling coordinated recording of a plurality of images by a plurality of cameras, wherein the plurality of cameras comprise a first camera according to Claim 6 and a second camera according to Claim 6, and wherein the method has the following steps:
- determining a deviation of a time of the first camera from a time of a timer,
- determining a deviation of a time of the second camera from the time of the same timer,
- causing a first image to be recorded by means of the first camera if the time of the first camera corresponds to a predefined first point in time, and
- causing a second image to be recorded by means of the second camera if the time of the second camera corresponds to a predefined second point in time.

9. Method according to Claim 8,
wherein the first camera has a first capture region and the second camera has a second capture region, and the first and second capture regions at least partially overlap.

10. Method according to either of Claims 8 and 9,
wherein the first camera records an object from a first perspective with the first image and the second camera records the same object from a second perspective with the second image.

11. Method according to one of Claims 8 to 10,
wherein the first image is recorded with predefined first recording parameters and the second image is recorded with predefined second recording parameters.

## Revendications

1. Procédé de détermination d'un écart entre un temps d'une caméra (10) et un temps d'un registre d'horloge, comprenant les étapes consistant à :
- envoyer (S1) un message de la caméra (10) au registre d'horloge,
- documenter le temps de la caméra (10) au moment de l'envoi du message,
- réceptionner le message par le registre d'horloge,
- documenter le temps du registre d'horloge au moment de la réception du message,
- transmettre (S2) une réponse du registre d'horloge à la caméra (10), dans lequel la réponse contient le temps du registre d'horloge au moment de la réception du message et le temps du registre d'horloge au moment de l'envoi de la réponse,
- réceptionner la réponse par la caméra (10),
- documenter le temps de la caméra (10) au moment de la réception de la réponse,
- calculer le temps de transmission du message ou de la réponse sur la base du temps de la caméra (10) au moment de l'envoi du message, du temps du registre d'horloge au moment de la réception du message, du temps du registre d'horloge au moment de l'envoi de la réponse et du temps de la caméra (10) au moment de la réception de la réponse, et
- calculer l'écart entre le temps de la caméra (10) et le temps du registre d'horloge sur la base du temps de transmission du message, du temps de la caméra (10) au moment de l'envoi du message et du temps du registre d'horloge au moment de la réception du message.

2. Procédé selon la revendication 1, dans lequel le temps de transmission est calculé en exécutant les étapes suivantes consistant à :
- soustraire le temps de la caméra (10) au moment de l'envoi du message du temps de la caméra (10) au moment de la réception de la réponse afin de calculer un temps total écoulé dans le système de la caméra (10),
- soustraire le temps du registre d'horloge au moment de la réception du message et du temps du registre d'horloge au moment de l'envoi de la réponse afin de calculer un temps de traitement du message dans le système du registre d'horloge,
- soustraire le temps de traitement calculé du message dans le système du registre d'horloge du temps total écoulé calculé dans le système de la caméra (10), afin de calculer un temps total écoulé pour la transmission du message et de la réponse, et
- diviser le temps total écoulé calculé pour la transmission du message et de la réponse par deux, afin de calculer le temps de transmission de la réponse du registre d'horloge à la caméra (10).

3. Procédé selon l'une quelconque des revendications précédentes, dans lequel l'écart entre le temps de la caméra (10) et le temps du registre d'horloge est calculé sur la base d'un temps de transmission connu du message de la caméra (10) au registre d'horloge en effectuant les étapes suivantes consistant à :
- soustraire le temps de la caméra (10) au moment de l'envoi du message du temps du registre d'horloge au moment de la réception du message afin de calculer un écart brut, et
- soustraire le temps de transmission du message de la caméra (10) au registre d'horloge de l'écart brut calculé, afin de calculer l'écart entre le temps de la caméra (10) et le temps du registre d'horloge.

4. Procédé selon l'une quelconque des revendications précédentes, dans lequel le registre d'horloge est un serveur de temps (21), un émetteur de signal temporel ou une caméra supplémentaire (22).

5. Procédé selon l'une quelconque des revendications précédentes, dans lequel la caméra (10) et le registre d'horloge sont situés dans un réseau local câblé ou sans fil, en particulier un réseau local sécurisé.

6. Caméra (10) comprenant une unité de traitement (101), dans laquelle l'unité de traitement (101) de la caméra (10) est adaptée pour effectuer les étapes suivantes afin de déterminer un écart entre un temps de la caméra (10) et un temps d'un registre d'horloge :
- envoyer (S1) un message de la caméra (10) au registre d'horloge,
- documenter le temps de la caméra (10) au moment de l'envoi du message,
- réceptionner une réponse du registre d'horloge, dans laquelle la réponse contient le temps du registre d'horloge au moment de la réception du message et le temps du registre d'horloge au moment de l'envoi de la réponse,
- documenter le temps de la caméra (10) au moment de la réception de la réponse,
- déterminer le temps de transmission du message ou de la réponse sur la base du temps de la caméra (10) au moment de l'envoi du message, du temps du registre d'horloge au moment de la réception du message, du temps du registre d'horloge au moment de l'envoi de la réponse et du temps de la caméra (10) au moment de la réception de la réponse, et
- calculer l'écart entre le temps de la caméra (10) et le temps du registre d'horloge sur la base du temps de transmission du message, du temps de la caméra (10) au moment de l'envoi du message et du temps du registre d'horloge au moment de la réception du message.

7. Registre d'horloge avec une unité de traitement, dans lequel l'unité de traitement du registre d'horloge est conçue pour effectuer les étapes suivantes consistant à :
- réceptionner un message provenant d'une caméra (10) selon la revendication 6,
- documenter le temps du registre d'horloge au moment de la réception du message, et
- envoyer (S2) une réponse du registre d'horloge à la caméra (10), dans lequel la réponse contient le temps du registre d'horloge au moment de la réception du message et le temps du registre d'horloge au moment de l'envoi de la réponse.

8. Procédé de commande d'une prise de vue coordonnée d'une pluralité d'images à partir d'une pluralité de caméras, dans lequel la pluralité de caméras comprend une première caméra selon la revendication 6 et une seconde caméra selon la revendication 6, et dans lequel le procédé comprend les étapes consistant à :
- déterminer un écart entre un temps de la première caméra et un temps d'un registre d'horloge,
- déterminer un écart entre un temps de la seconde caméra et un temps du même registre d'horloge,
- provoquer une prise de vue d'une première image au moyen de la première caméra, lorsque le temps de la première caméra correspond à un premier moment prédéterminé, et
- provoquer une prise de vue d'une seconde image au moyen de la seconde caméra, lorsque le temps de la seconde caméra correspond à un second moment prédéterminé.

9. Procédé selon la revendication 8, dans lequel la première caméra comprend une première zone de détection et la seconde caméra comprend une seconde zone de détection, et les première et seconde zones de détection se chevauchent au moins partiellement.

10. Procédé selon l'une quelconque des revendications 8 ou 9, dans lequel la première caméra avec la première image prend un objet à partir d'une première perspective et la seconde caméra avec la seconde image prend le même objet à partir d'une seconde perspective.

11. Procédé selon l'une quelconque des revendications 8 à 10, dans lequel la prise de la première image est réalisée avec des premiers paramètres de prise de vue prédéterminés et la prise de la seconde image est réalisée avec des seconds paramètres de prise de vue prédéterminés.
